# EUROPÄISCHE PATENTANMELDUNG

(11) **EP 3 785 807 A1**
(43) Veröffentlichungstag der Anmeldung: **03.03.2021**
(21) Anmeldenummer: 19194315.8
(22) Anmeldetag: 29.08.2019
(51) Int. Cl.: B05C 17/00, C03C 17/00

(54) **FLÜSSIGKEITS-APPLIKATOR UND VERWENDUNG DESSELBEN**

(71) Anmelder: SIKA TECHNOLOGY AG, 6340 Baar (CH)
(72) Erfinder: Kube, Nicole, 8103 Unterengstringen (CH); Balmer, Marc, 8103 Unterengstringen (CH)
(74) Vertreter: Sika Patent Attorneys

(57) **Zusammenfassung**

Die Erfindung betrifft einen Flüssigkeits-Applikator (1; 1') zum Auftragen einer Flüssigkeit auf eine Fläche, aufweisend:
- ein saugfähiges, formelastisches Auftragelement (3),
- ein Handhabungsteil (2), das zur temporären Aufnahme und Fixierung des Auftragelementes an einem ersten offenen Ende derart ausgebildet ist, dass ein Abschnitt des Auftragelementes aus dem Ende des Handhabungsteils vorsteht, und
einen in das Handhabungsteil eingefügten Auswerfer (4; 5; 5') zum Auswerfen des Auftragelementes aus dem Handhabungsteil durch das offene Ende.

## Beschreibung

### Technisches Gebiet

Die Erfindung betrifft einen Flüssigkeits-Applikator zum Auftragen einer Flüssigkeit auf eine Fläche, vorzugsweise zum Auftrag eines Primers oder einer Harzlösung auf eine Glasoberfläche, insbesondere die Oberfläche einer PKW-Frontscheibe. Sie betrifft des Weiteren eine Verwendung eines derartigen Flüssigkeits-Applikators.

### Stand der Technik

Werkzeuge zum Aufbringen von Flüssigkeiten mit mehr oder minder hoher Viskosität auf glatte oder auch raue Oberflächen sind seit Jahrhunderten bekannt und seither im massenhaften Einsatz. Traditionell zählen hierzu insbesondere Pinsel oder Bürsten verschiedenster Art und Aufstreich-Rakel. Bereits seit Längerem werden auch Schwämme oder Filz-Teile für derartige Arbeiten benutzt. Es sind auch Werkzeuge entwickelt worden und im Einsatz, bei denen der Schwamm oder Filz in ein Handhabungsteil mit einem Handgriff oder in einen Applikatorstift eingefügt ist.

Für viele Anwendungen eignen sich einfache Schwämme oder Filze, ohne speziellen Halter. Diese sind sehr billig und können nach Gebrauch entsorgt werden. Für manche Anwendungen lässt sich bei ihrer Handhabung jedoch kein Flüssigkeitsauftrag mit der gewünschten Gleichmäßigkeit erreichen. Zudem ist beim Auftrag von aggressiven bzw. gesundheitsschädlichen Flüssigkeiten die Gefahr einer Kontaminierung der Finger gegeben. Werden bei solchen Anwendungen sinnvollerweise Handschuhe getragen, so werden diese kontaminiert und müssen zusammen mit dem Schwamm oder Filz entsorgt werden.

Grundsätzlich ist ein gleichmäßigerer Flüssigkeitsauftrag mit einem handgeführten Werkzeug möglich, in das das Auftragelement (Schwamm oder Filz) eingefügt ist. Ist es dort fest eingefügt, so muss jedoch der gesamte Applikator nach Gebrauch entsorgt werden, was erhöhte Kosten mit sich bringt. Ist das Auftragelement hingegen herausnehmbar in den Applikator eingefügt, hat sein Herausnehmen nach Gebrauch wiederum die unerwünschte Kontamination der Finger oder eines Handschuhs zur Folge.

Der Erfindung liegt daher die Aufgabe zu Grunde, einen Flüssigkeits-Applikator bereitzustellen, der einen sehr gleichmäßigen Auftrag von Flüssigkeit auf eine Oberfläche ermöglicht und dessen Auftragelement nach Gebrauch berührungslos entnommen und entsorgt werden kann.

### Offenbarung der Erfindung

Diese Aufgabe wird durch einen Flüssigkeits-Applikator mit den Merkmalen des Anspruchs 1 gelöst. Zweckmäßige Fortbildungen des Erfindungsgedankens sind Gegenstand der abhängigen Ansprüche.

Die Erfindung schließt den Gedanken sein, als Mittel zum Auftragen einer Flüssigkeit auf eine Fläche ein saugfähiges und formelastisches Auftragelement einzusetzen, welches in einem Handhabungsteil temporär aufgenommen und fixiert ist. Gemäß einem weiteren Aspekt der Erfindung ist das Auftragelement im Handhabungsteil an einem offenen Ende desselben derart eingefügt, dass ein hinreichend großer Abschnitt des Auftragelementes aus dem Ende des Handhabungsteils vorsteht. Dieser Abschnitt ist wirksam für den Auftrag der Flüssigkeit, während ein weiterer Abschnitt, der im Handhabungsteil aufgenommen ist, der Fixierung des Auftragelementes im Handhabungsteil dient. Des Weiteren schließt die Erfindung den Gedanken ein, und einen in das Handhabungsteil eingefügten Auswerfer zum Auswerfen des Auftragelementes aus dem Handhabungsteil durch das offene Ende, vorzusehen.

Mit dem erfindungsgemäßen Flüssigkeits-Applikator wird es möglich, das Auftragelement präzise zu führen und einen gleichmäßigen Andruck auf die zu behandelnde Fläche auszuüben. Zugleich ermöglicht die Herausnehmbarkeit des Auftragelementes dessen Entsorgung bei gleichzeitiger Weiterverwendung des Handhabungsteils, was zu niedrigen Werkzeugkosten bei entsprechenden Verfahren beiträgt. Des Weiteren kann das Auftragelement aus dem Handhabungsteil ausgeworfen werden, ohne dass es berührt werden muss, was ein sicheres Arbeiten ohne Handschuhe ermöglicht und einen weiteren Beitrag zu niedrigen Kosten leistet.

In einer Ausführung der Erfindung hat das Handhabungsteil ein dem ersten offenen Ende gegenüberliegendes zweites offenes Ende, aus dem der Auswerfer hervorsteht. Der Auswerfer ist im Handhabungsteil in Richtung auf das Auftragelement so weit verschiebbar, dass sein vollständiges Verschieben zu einem Herausfallen des Auftragelementes aus dem ersten offenen Ende führt. Grundsätzlich kann im Rahmen der Erfindung der Auswerfer auch anders angeordnet und ausgeführt sein, beispielweise als ein seitlich am Handhabungsteil angebrachter Auswurfe-Hebel. Die vorgenannte Ausführung erscheint jedoch aus derzeitiger Sicht besonders funktionssicher und leicht bedienbar.

In einer weiteren konstruktiven Ausgestaltung hat das Handhabungsteil einen langgestreckten Griffabschnitt und einen verbreiterten Auftragelement-Aufnahmeabschnitt, der sich an den Griffabschnitt anschließt. Dies ermöglicht es insbesondere, die Form des Griffabschnitts unabhängig von der Größe und Form des Auftragelementes festzulegen und unter ergonomischen wie auch Konstruktions-Aspekten zu optimieren. In besonders kostengünstiger Ausführung sind hierbei der Griffabschnitt und der Auftragelement-Aufnahmeabschnitt einstückig, insbesondere als Kunststoff-Spritzgussteil, gebildet.

Zur oben erwähnten temporären Fixierung sind an der Innenwandung des Handhabungsteils, benachbart zu einer Umfangsoberfläche des Auftragelementes, Haltemittel zum Fixieren des Auftragelementes vorgesehen. Insbesondere weisen die Haltemittel Vorsprünge auf, die derart konfiguriert sind, dass sie beim Eindrücken des Auftragelementes in das offene Ende des Handhabungsteils selbsttätig formelastisch und/oder reibschlüssig in die Umfangsfläche des Auftragelementes eingreifen. Insbesondere sind die Vorsprünge an die Innenwandung des Auftragelement-Aufnahmeabschnitts über dessen Innenumfang verteilt (mit Abständen) angeformt.

Hierdurch wird in vorteilhafter Weise die ohnehin gegebene Formelastizität an sich bekannter Auftragelemente, wie Schwämme oder Filze, zur selbsttätigen Fixierung im Handhabungsteil genutzt. Bewegliche Haltemittel bzw. entsprechende zusätzliche Handgriffe zur Fixierung des Auftragelementes werden hierdurch überflüssig.

In weiteren konstruktiven Ausführungen ist der Griffabschnitt des Handhabungsteils als ein (im Querschnitt) im Wesentlichen geschlossenes Profilteil, insbesondere als Rohr oder als drei-, vier- oder sechskantiges Profilteil, ausgebildet. Diese Ausführungen sind konstruktiv besonders einfach und kostengünstig realisierbar und besonders vorteilhaft in Verbindung mit einem nachfolgend erläuterten bevorzugten Merkmal des vorgeschlagenen Applikators. Es ist im Rahmen der Erfindung jedoch auch möglich, die Außenkontur des Griffabschnitts ergonomisch für den jeweiligen Einsatz zu optimieren, etwa durch Anformen von Daumen- oder Fingermulden, Ummanteln mit einem Soft-Kunststoff o. ä.

In einer weiteren bevorzugten Ausführung ist der Auswerfer im Wesentlichen stempelförmig ausgebildet. Er hat hierbei einen mit seiner Außenkontur an die Innenkontur des Griffabschnitts des Handhabungsteils angepassten, insbesondere zylindrischen oder die Form eines Drei-, Vier- oder Sechskant-Prismas aufweisenden Führungsabschnitt. Der Führungsabschnitt gleitet beim Auswerfen des Auftragelementes aus dem Handhabungsteil in dessen Griffabschnitt.

Weiterhin hat der Auswerfer in dieser Ausführung eine Endplatte an einem Ende des Führungsabschnitts, wobei die Kontur der Endplatte, insbesondere an die Innenkontur des Auftragelement-Aufnahmeabschnitts des Handhabungsteils angepasst ist. Der letztere Aspekt ist nicht zwingend; Die Kontur der Endplatte kann von der Innenkontur des Auftragelement-Aufnahmeabschnitts auch deutlich abweichen und ggf. kleiner als die Querschnittsfläche des Auftragelementes sein, sofern dessen Beschaffenheit dennoch ein sicheres Auswerfen nach dem Gebrauch ermöglicht.

In einer weiteren Ausführung der Erfindung ist am freien Ende des Führungsabschnitts des Auswerfers eine Verdickung, ein Vorsprung oder ein Aufsatzteil vorgesehen, welche/s ein vollständiges Hineingleiten des Führungsabschnitt in den Griffabschnitt des Handhabungsteils beim Auswerfen des Auftragelementes verhindert. Diese Ausgestaltung erfordert zwar einen gewissen zusätzlichen Montageaufwand, bietet aber den Vorteil einer weiter verbesserten Handhabung. Aus derzeitiger Sicht wird sie bevorzugt dadurch realisiert, dass am freien Ende des Führungsabschnitts ein separates Aufsatzteil befestigt, insbesondere aufgeschraubt, aufgeschweißt oder aufgeklebt, ist.

Die zuletzt erwähnte Ausführung kann dadurch weiter ausgestaltet sein, dass zwischen dem freien Ende des Griffabschnitts des Handhabungsteils und der Verdickung, dem Vorsprung oder dem Aufsatzteil am Auswerfer eine Druckfeder vorgesehen ist, welche den Auswerfer in eine Ruhestellung gegenüber dem Handhabungsteil vorspannt. Beim Auswerfen wird dann der Auswerfer gegen die Wirkung der Druckfeder zum offenen Ende des Handhabungsteils gedrückt; die Federkraft der Druckfeder ist also derart bemessen, dass dieser Bewegung kein unnötig hoher Widerstand entgegengesetzt wird. Grundsätzlich liefert aber bereits das Auftragelement selbst, aufgrund seiner Fixierung am offenen Ende des Handhabungsteils und vermittels seiner Formelastizität, eine Druckkraft zum Vorspannen des Auswerfers in seine Ruhestellung.

Beim Auftragelement handelt sich bevorzugt um einen Schwamm oder Filz mit einer Außenkontur, die an die Innenkontur des Auftragelement aufnehmenden Abschnitts des Handhabungsteils angepasst ist und zum Auftrag eines Primers oder einer Harzlösung auf eine glatte Oberfläche, insbesondere Glasoberfläche, ausgebildet ist. Derartige Auftragelemente sind dem Fachmann an sich bekannt und mit für verschiedene Beschichtungsaufgaben geeigneten Eigenschaften lieferbar oder können jedenfalls ohne weiteres aus entsprechendem Material entsprechend der Konstruktion des Flüssigkeits-Applikators zugeschnitten werden.

Aus derzeitiger Sicht ist das Auftragelement und, daran angepasst, der Auftragelement-Aufnahmeabschnitt des Handhabungsteils bevorzugt im Wesentlichen quaderförmig, insbesondere mit abgerundeten kurzen Seitenkanten, ausgebildet. Jedoch kann das Auftragelement, angepasst an spezielle Anwendungsfälle, beispielsweise auch als Prisma mit trapezförmiger Grundfläche ausgeführt sein oder statt paralleler langer Seitenflächen zueinander geneigte Seitenflächen oder eine gekrümmte Seitenfläche haben etc., vorausgesetzt, dass seine Form eine sichere temporäre Fixierung in einem entsprechend angepassten Handhabungsteil ermöglicht.

Der hier beschriebene Flüssigkeits-Applikators wird in einem Ausführungsbeispiel zum Auftrag eines Primers oder einer Harzlösung oder einem Korrosionsschutz verwendet.

In einem weiteren Ausführungsbeispiel wird der hier beschriebene Flüssigkeits-Applikator zum Auftrag auf eine Glasoberfläche, insbesondere die Oberfläche einer PKW-Frontscheibe, oder zum Auftrag auf eine Karosserie, oder zum Auftrag auf eine Restraupe, verwendet.

In einem weiteren Ausführungsbeispiel wird der hier beschriebene Flüssigkeits-Applikator

Vorteile und Zweckmäßigkeiten der Erfindung ergeben sich aus den Unteransprüchen.

In der nachfolgenden Beschreibung werden für gleiche und gleichwirkende Teile dieselben Bezugsziffern verwendet. In diesen zeigen:
- Fig. 1: eine Gesamtansicht einer Ausführungsform des erfindungsgemäßen Flüssigkeits-Applikators,
- Fig. 2A u. 2B: perspektivische Darstellungen des Handhabungsteils (Fig. 2A) bzw. des Auswerfers (Fig. 2B) als wesentliche Komponenten des Flüssigkeits-Applikators nach Fig. 1 und
- Fig. 3: eine modifizierte Ausführung des erfindungsgemäßen Flüssigkeits-Applikators.

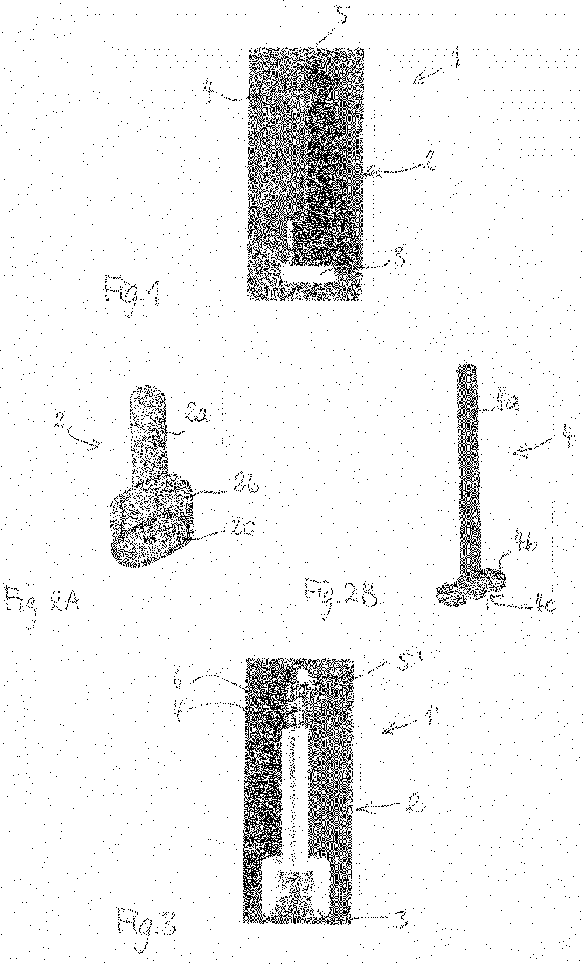

Fig. 1 zeigt einen Flüssigkeits-Applikator 1, der ein Handhabungsteil 2 umfasst, an dessen einem Ende ein Schwamm 3 als Auftragelement zum Auftragen einer Flüssigkeit auf eine Fläche derart aufgenommen ist, dass er aus dem Handhabungsteil hervorsteht, und aus dessen gegenüberliegendem Ende ein Auswerfer 4 hervorsteht. Am oberen Ende des Auswerfers 4 befindet sich ein zylindrisches Aufsatzteil 5 mit gegenüber dem Auswerfer 4 vergrößertem Umfang.

Wie in Fig. 1 und Fig. 2A zu erkennen ist, umfasst das Handhabungsteil 2 einen rohrförmigen Griffabschnitt 2a und einen daran angeformten Auftragelement-Aufnahmeabschnitt 2b. Dieser ist gegenüber dem Griffabschnitt 2a verbreitert und hat die Form eines Quaders mit beidseits angefügten halbzylindrischen Endabschnitten. Der Schwamm 3 hat eine zu dieser Form des Auftragelement-Aufnahmeabschnittes 2b korrespondierende Form, so dass er vom offenen Ende her in den Auftragelement-Aufnahmeabschnitt 2b einschiebbar ist.

An der Innenwandung des Auftragelement-Aufnahmeabschnittes 2b sind vier angeformte Vorsprünge 2c vorgesehen (von denen in Fig. 2A nur zwei zu erkennen sind). Diese greifen bei eingesetztem Schwamm 3 jeweils in die langen Seitenflächen des formelastischen Schwammes ein und halten diesen hierdurch im Handhabungsteil 2.

Fig. 2B zeigt den Auswerfer 4, der annähernd stempelförmig konstruiert ist und einen langen rohrförmigen Führungsabschnitt 4a und eine an dessen eines Ende angeformte Endplatte 4b umfasst. Die Endplatte 4b hat eine zur Innenkontur des Auftragelement-Aufnahmeabschnitts 2b des Handhabungsteils 2 korrespondierende Außenkontur, mit vier Ausnehmungen 4c, deren Position und Form zur Position und Form der Vorsprünge 2c an der Innenwandung des Auftragelement-Aufnahmeabschnitts 2b korrespondiert. Beim Ausstoßen des Auftragelementes aus dem Handhabungsteil kann somit die Endplatte ohne weiteres an den Vorsprüngen, die das Auftragelement fixieren, vorbeigleiten.

Auf den in Fig. 2B gezeigten Auswerfer 4 kann das in Fig. 1 gezeigte Aufsatzteil 5 (je nach dessen konkreter Ausführung) beispielsweise aufgeklebt oder mittels eines geeignet dimensionierten Zapfens mit Presspassung in das offene obere Ende des Führungsabschnitts 4a fest eingefügt sein. Das obere Ende des Führungsabschnitts kann auch mit einem Gewinde oder einer Rastführung in Art eines Bajonettverschlusses versehen sein und das Aufsetzteil eine dazu korrespondierende Ausgestaltung haben.

Es wird darauf hingewiesen, dass zur Erreichung dessen, dass der Auswerfer beim Auswerfen des Auftragelementes nicht vollständig in das Handhabungsteil hineingleitet, auch eine an den Führungsabschnitt des Auswerfers angeformte Verdickung oder ein Vorsprung o. ä. vorgesehen sein könnte. Dies würde jedoch die weiter unten beschriebene Montage des Applikators erschweren bzw. unmöglich machen, so dass dann weitere konstruktive Abwandlungen am Auswerfer, etwas das Vorsehen einer lösbaren Verbindung zwischen dem Führungsabschnitt und der Endplatte, vorgesehen werden müssten.

Der Auswerfer 4 ist derart konfiguriert, dass er bei der Montage des Flüssigkeits-Applikators 1 einfach vom offenen Ende des Auftragelement-Aufnahmeabschnitts 2b her in das Handhabungsteil 2 eingeschoben werden kann. Anschließend wird das separat gefertigte Aufsatzteil 5 am freien Ende des Führungsabschnitts 4a des Auswerfers angebracht. Schließlich wird der Schwamm 3 vom offenen Ende des Auftragelement-Aufnahmeabschnitts 2b her in das Handhabungsteil 2 eingefügt. Der Flüssigkeits-Applikator 1 ist somit vollständig montiert und gebrauchsfertig. Hierbei drückt der durch die Vorsprünge 2c im Handhabungsteil 2 fixierte Schwamm 3 aufgrund seiner Formelastizität gegen die Unterseite der Endplatte 4c des Auswerfers 4 und hält diesen somit in der in Fig. 1 gezeigten Ruheposition.

Wenn nach Gebrauch des Flüssigkeits-Applikators der Schwamm 3 ausgetauscht werden soll, drückt der Benutzer von oben auf das Aufsatzteil 5, und der mit dem Führungsabschnitt 4a im Griffabschnitt 2a des Handhabungsteils 2 geführte Auswerfer 4 gleitet in Längsrichtung des Flüssigkeits-Applikators 1 in Richtung des offenen Endes des Auftragelement-Aufnahmeabschnitts 2b und stößt dieses aus dem offenen Ende aus. Hierzu ist keine weitere Betätigung durch den Benutzer und insbesondere keine Berührung des Schwammes erforderlich.

Fig. 3 zeigt einen gegenüber der oben beschriebenen Ausführung geringfügig modifizierten Flüssigkeits-Applikator 1', dessen wesentlichen Komponenten die gleichen sind wie beim Flüssigkeits-Applikator 1 und mit den gleichen Bezugsziffern bezeichnet sind. Abgesehen davon, dass hier ein Aufsatzteil 5' mit sechseckigem Querschnitt vorgesehen ist, ist zwischen dem oberen Ende des Handhabungsteils 2 und der diesem zugewandten Fläche des Aufsatzteils 5' eine Druckfeder 6 verspannt, die den Auswerfer 4 (zusätzlich zur oben beschriebenen Wirkung des formelastischen Schwammes 3) in die Ruheposition drückt und dort dann auch hält, wenn der Benutzer des Flüssigkeits-Applikators unbeabsichtigt das Aufsatzteil von oben berührt.

Hierdurch wird noch zuverlässiger als bei der ersten Ausführung gewährleistet, dass das Auftragelement 3 nicht unbeabsichtigt aus dem Applikator ausgestoßen wird.

Es ist dem Fachmann ersichtlich, dass die Erfindung nicht auf die vorstehend beschriebenen Beispiele beschränkt ist, sondern vielmehr in vielfältiger Weise variiert werden kann. Insbesondere können die Merkmale der einzeln dargestellten Beispiele auch miteinander kombiniert oder gegeneinander ausgetauscht werden.

### Bezugszeichen

- 1; 1': Flüssigkeits-Applikator
- 2: Handhabungsteil
- 2a: Griffabschnitt
- 2b: Auftragelement-Aufnahmeabschnitt
- 2c: Vorsprünge
- 3: Schwamm (Auftragelement)
- 4: Auswerfer
- 4a: Führungsabschnitt
- 4b: Endplatte
- 4c: Ausnehmungen
- 5; 5': Aufsatzelement
- 6: Druckfeder

## Patentansprüche

1. Flüssigkeits-Applikator (1; 1') zum Auftragen einer Flüssigkeit auf eine Fläche, aufweisend:
- ein saugfähiges, formelastisches Auftragelement (3),
- ein Handhabungsteil (2), das zur temporären Aufnahme und Fixierung des Auftragelementes an einem ersten offenen Ende derart ausgebildet ist, dass ein Abschnitt des Auftragelementes aus dem Ende des Handhabungsteils vorsteht, und
- einen in das Handhabungsteil eingefügten Auswerfer (4; 5; 5') zum Auswerfen des Auftragelementes aus dem Handhabungsteil durch das offene Ende.

2. Flüssigkeits-Applikator nach Anspruch 1, wobei das Handhabungsteil (2) ein dem ersten offenen Ende gegenüberliegendes zweites offenes Ende hat, aus dem der Auswerfer hervorsteht, und der Auswerfer (4; 5; 5') im Handhabungsteil in Richtung auf das Auftragelement so weit verschiebbar ist, dass sein vollständiges Verschieben zu einem Herausfallen des Auftragelementes (3) aus dem ersten offenen Ende führt.

3. Flüssigkeits-Applikator nach Anspruch 1 oder 2, wobei das Handhabungsteil (2) einen langgestreckten Griffabschnitt (2a) und einen verbreiterten Auftragelement-Aufnahmeabschnitt (2b) hat, der sich an den Griffabschnitt anschließt.

4. Flüssigkeits-Applikator nach Anspruch 3, wobei der Griffabschnitt (2a) und der Auftragelement-Aufnahmeabschnitt (2b) einstückig, insbesondere als Kunststoff-Spritzgussteil, gebildet sind.

5. Flüssigkeits-Applikator nach einem der vorangehenden Ansprüche, wobei an der Innenwandung des Handhabungsteils (2), benachbart zu einer Umfangsoberfläche des Auftragelementes (3), Haltemittel (2c) zum Fixieren des Auftragelementes vorgesehen sind.

6. Flüssigkeits-Applikator nach Anspruch 5, wobei die Haltemittel (2c) Vorsprünge aufweisen, die derart konfiguriert sind, dass sie beim Eindrücken des Auftragelementes (3) in das offene Ende des Handhabungsteils (2) selbsttätig formelastisch und/oder reibschlüssig in die Umfangsfläche des Auftragelementes eingreifen.

7. Flüssigkeits-Applikator nach Anspruch 6 und Anspruch 3 oder 4, wobei die Vorsprünge (2c) an die Innenwandung des Auftragelement-Aufnahmeabschnittes (2b) des Handhabungsteils über den Innenumfang verteilt angeformt sind.

8. Flüssigkeits-Applikator nach einem der Ansprüche 3 - 7, wobei der Griffabschnitt (2a) des Handhabungsteils (2) ein im Querschnitt im Wesentlichen geschlossenes Profilteil, insbesondere als Rohr oder als drei-, vier- oder sechskantiges Profilteil, ausgebildet ist.

9. Flüssigkeits-Applikator nach Anspruch 8, wobei der Auswerfer (4) stempelförmig ausgebildet ist und einen mit seiner Außenkontur an die Innenkontur des Griffabschnitts (2a) des Handhabungsteils (2) angepassten, insbesondere zylindrischen oder die Form eines Drei-, Vier- oder Sechskant-Prismas aufweisenden Führungsabschnitt (4a) und eine Endplatte (4b) an einem Ende des Führungsabschnitts hat, wobei die Kontur der Endplatte, insbesondere an die Innenkontur des Auftragelement-Aufnahmeabschnitts (2b) des Handhabungsteils angepasst ist.

10. Flüssigkeits-Applikator nach Anspruch 9, wobei am freien Ende des Führungsabschnitts (4a) des Auswerfers (4) eine Verdickung, ein Vorsprung oder ein Aufsatzteil (5; 5') vorgesehen ist, welche/s ein vollständiges Hineingleiten des Führungsabschnitt in den Griffabschnitt (2a) des Handhabungsteils (2) beim Auswerfen des Auftragelementes (3) verhindert.

11. Flüssigkeits-Applikator nach Anspruch 10, wobei am freien Ende des Führungsabschnitts (4a) ein separates Aufsatzteil (5, 5') befestigt, insbesondere aufgeschraubt, aufgeschweißt oder aufgeklebt, ist.

12. Flüssigkeits-Applikator nach Anspruch 10 oder 11, wobei zwischen dem freien Ende des Griffabschnitts (2a) des Handhabungsteils (2) und der Verdickung, dem Vorsprung oder dem Aufsatzteil (5; 5') am Auswerfer (4) eine Druckfeder (6) vorgesehen ist, welche den Auswerfer in eine Ruhestellung gegenüber dem Handhabungsteil vorspannt.

13. Flüssigkeits-Applikator nach einem der vorangehenden Ansprüche, wobei das Auftragelement (3) als Schwamm oder Filz mit einer Außenkontur, die an die Innenkontur des Auftragelement aufnehmenden Abschnitts des Handhabungsteils angepasst ist und zum Auftrag eines Primers oder einer Harzlösung auf eine glatte Oberfläche, insbesondere Glasoberfläche, ausgebildet ist.

14. Flüssigkeits-Applikator nach Anspruch 13, wobei das Auftragelement (3) und, daran angepasst, der Auftragelement-Aufnahmeabschnitt (2b) des Handhabungsteils (2) im Wesentlichen quaderförmig, insbesondere mit abgerundeten kurzen Seitenkanten, ausgebildet ist.

15. Verwendung eines Flüssigkeits-Applikators (1; 1') nach einem der vorangehenden Ansprüche zum Auftrag eines Primers oder einer Harzlösung auf eine Glasoberfläche, insbesondere die Oberfläche einer PKW-Frontscheibe.
